# EUROPEAN PATENT APPLICATION

(11) **EP 2 737 980 A1**
(43) Date of publication of application: **04.06.2014**
(21) Application number: 13190021.9
(22) Date of filing: 24.10.2013
(51) Int. Cl.: B25J 9/00

(54) **Robot disposed adjacent to a conveyance path and retractable in a parking position**

(30) Priority: 03.12.2012 JP 2012263994
(71) Applicant: Kabushiki Kaisha Yaskawa Denki, Kitakyushu-shi, Fukuoka 806-0004 (JP)
(72) Inventor: Nagamatsu, Takenori, Fukuoka 806-0004 (JP)
(74) Representative: Viering, Jentschura & Partner Patent- und Rechtsanwälte

(57) **Abstract**

A robot (100) includes a hand (2) configured to process a workpiece (400, 401), and an articulated-robot main body (1) where the hand (2) is mounted. The articulated-robot main body (1) is displaced from a conveyance path of the workpiece (400, 401) in plan view.

## Description

### CROSS-REFERENCE TO RELATED APPLICATIONS

This application is based on Japanese Patent Application No. 2012-263994 filed with the Japan Patent Office on December 3, 2012, the entire content of which is hereby incorporated by reference.

### BACKGROUND

### 1. TECHNICAL FIELD

This disclosure relates to a robot.

### 2. RELATED ART

Conventionally, a parallel link robot where an end effector (hand) is mounted is known. For example, JP-A-2011-88262 discloses a parallel link robot that includes a base part, a movable part, and three link parts that couple the base part and the movable part together. An end effector is mounted on the movable part of this parallel link robot. Each link part is driven by a drive unit. In conjunction with the movement (bending and extension) of the link part, the movable part moves up and down. This positions the end effector in a predetermined position. This parallel link robot is typically disposed immediately above a workpiece processed (for example, gripped) by the end effector. The movable part (end effector) of the parallel link robot contracts the link part to move upward.

However, as described in the above-noted document, in the case where the parallel link robot is disposed immediately above the workpiece, the following problem may occur. That is, the range of motion of the parallel link robot becomes comparatively small. Accordingly, when the user processes the workpiece, the parallel link robot may hinder a user from operating.

An object of this disclosure is to provide a robot that can reduce hindering the operation by the user when the user processes the workpiece.

### SUMMARY

A robot includes a hand configured to process a workpiece, and an articulated-robot main body where the hand is mounted. The articulated-robot main body is displaced from a conveyance path of the workpiece in plan view.

### BRIEF DESCRIPTION OF THE DRAWINGS

Fig. 1 is a perspective view illustrating a schematic configuration of a robot disposed in a ceiling-suspended state at a support member based on one embodiment of this disclosure;
Fig. 2 is a perspective view illustrating a schematic configuration of the robot based on the one embodiment of this disclosure;
Fig. 3 is a top view of the robot disposed in the ceiling-suspended state at the support member based on the one embodiment of this disclosure;
Fig. 4 is a side view of the robot disposed in the ceiling-suspended state at the support member based on the one embodiment of this disclosure;
Fig. 5 is a block diagram for describing a control of the robot based on the one embodiment of this disclosure;
Fig. 6 is an explanatory view illustrating a suctioning operation of an upper box by the robot based on the one embodiment of this disclosure, viewed from the side;
Fig. 7 is an explanatory view illustrating an operation for placing the upper box on a lower box by the robot based on the one embodiment of this disclosure, viewed from above;
Fig. 8 is an explanatory view illustrating the operation for placing the upper box on the lower box by the robot based on the one embodiment of this disclosure, viewed from the side;
Fig. 9 is an explanatory view illustrating a state where the robot based on the one embodiment of this disclosure has retreated, viewed from the side; and
Fig. 10 is an explanatory view illustrating the state where the robot based on the one embodiment of this disclosure has retreated, viewed from above.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A robot according to an aspect of this disclosure includes a hand configured to process a workpiece, and an articulated-robot main body where the hand is mounted. The articulated-robot main body is displaced from a conveyance path of the workpiece in plan view.

According to a first aspect of the robot, as described above, the articulated-robot main body is disposed displaced from a conveyance path of the workpiece in plan view. This allows displacing the robot from a route on which a user moves for processing the workpiece. As a result, this can reduce hindering the user operation due to the robot when the user processes the workpiece.

The robot according to a second aspect includes: a hand configured to process a workpiece; and an articulated-robot main body where the hand is mounted. The articulated-robot main body is configured to retreat to a position so as not to hinder an operation of a user for processing the workpiece by moving in a predetermined direction.

In the robot according to the second aspect, for example, in the case where the hand is not processing the workpiece, the articulated-robot main body moves in a predetermined direction. Accordingly, the articulated-robot main body retreats to the position so as not to hinder the operation by the user when the user processes the workpiece. The above-described predetermined direction is not specifically limited. In the case where the articulated-robot main body is disposed in a ceiling-suspended state, the predetermined direction may be, for example, an upward direction.
In the parallel link robot, in the case where this robot is disposed immediately above the workpiece, the link part is contracted so as to move the movable part (end effector) of the parallel link robot upward. However, the range of motion of the parallel link robot is comparatively small. Therefore, the parallel link robot hinders the operation by the user when the user processes the workpiece. On the other hand, the robot according to the second aspect includes the articulated-robot main body that has a comparatively wide range of motion. This facilitates retreat of the articulated-robot main body to the position so as not to hinder the operation by the user when the user processes the workpiece.

The above-described configuration reduces hindering the user operation due to the robot when the user processes the workpiece.

Hereinafter, a description will be given of this embodiment based on the drawings.

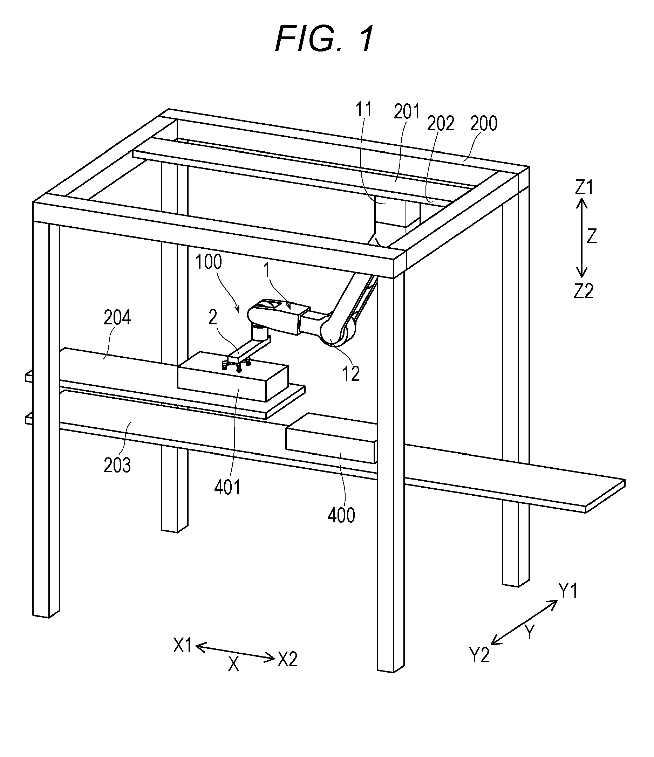

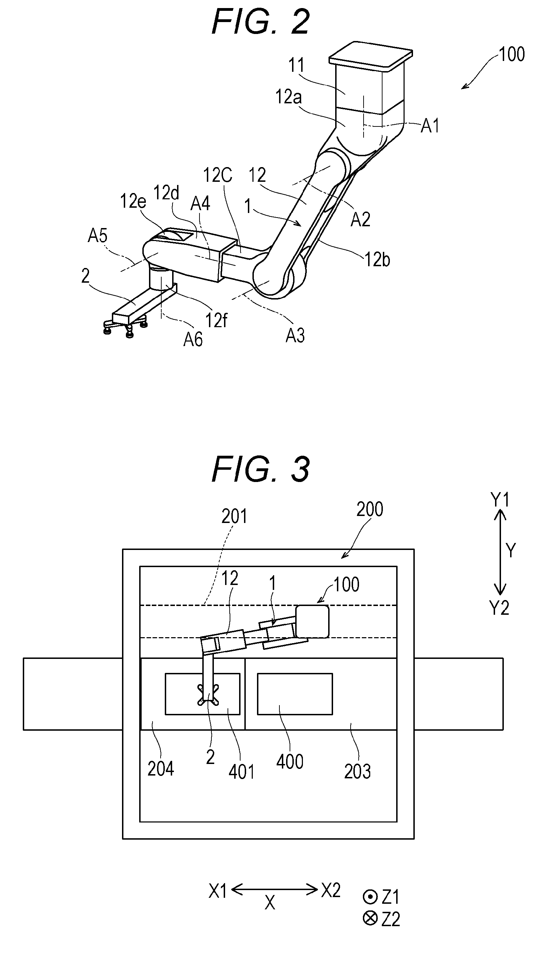

First, a schematic configuration of a robot 100 based on this embodiment will be described with reference to Figs. 1 and 2. In the following embodiment, a vertical articulated robot disposed in a ceiling-suspended state will be described as an example. However, this disclosure is not limited to this, and is applicable to a vertical articulated robot disposed on the ground. For those skilled in the art, it may be readily appreciated that this disclosure is applicable to a horizontal articulated robot.
Here, in the drawings, the arrow X denotes a direction from X1 to X2 (the X2 direction), the opposite direction (the X1 direction) of this direction, or both these directions (the X directions). That is, the arrow X means a direction for conveying an upper box 401 and a lower box 400. The arrow Y denotes a direction from Y1 to Y2 (the Y2 direction), the opposite direction (the Y1 direction) of this direction, or both these directions (the Y directions). That is, this arrow Y is approximately perpendicular to the arrow X, and corresponds to the width direction of a support member 200. The arrow Z denotes a direction from Z1 to Z2 (the Z2 direction), the opposite direction (the Z1 direction) of this direction, or both these directions (the Z directions). That is, this arrow Z is perpendicular to the arrows X and Y, and corresponds to the longitudinal direction of the support member 200.
Furthermore, the word "process" used in this description means an operation to move an object to a predetermined position by, for example, detachably/reattachably "gripping", "suctioning", "fitting" or "engaging" the object. The word "process" is not limited to these operations, and includes other operations that should be readily apparent to those skilled in the art. Additionally, "the degree of freedom" used in this description denotes, as well known to those skilled in the art, in straightforward terms, the number of directions in which the configuration members can move.

As illustrated in Fig. 1, the robot 100 is disposed in a ceiling-suspended state at the support member (portal frame) 200 that supports the robot 100. Specifically, a base 11 of the robot 100 described later is mounted on a beam part 201 disposed at the support member 200. Accordingly, the robot 100 is disposed in the ceiling-suspended state at the support member 200. An opening part 202 is formed in a part other than the beam part 201 on the ceiling at the support member 200.

A lower conveyor 203 and an upper conveyor 204 are disposed inside of the support member 200. The lower conveyor 203 conveys, for example, the lower box 400 that houses a food product inside, along the direction from X1 to X2 (the X2 direction). The lower conveyor 203 stops when the lower box 400 conveyed along the X2 direction reaches a predetermined position (the proximity of the robot 100). The lower conveyor 203 includes a positioning member (not shown) for positioning the lower box 400 in the predetermined position. The lower conveyor 203 and the upper conveyor 204 are examples of "conveyor". The lower box 400 is an example of "workpiece".

The upper conveyor 204 conveys the upper box 401 to be placed on the lower box 400 along the X2 direction. The upper conveyor 204 stops when the upper box 401 conveyed along the X2 direction reaches a predetermined position (the proximity of the robot 100). The upper conveyor 204 includes a positioning member (not shown) for positioning the upper box 401 in the predetermined position.
The upper conveyor 204 is disposed on the upper side with respect to the lower conveyor 203. That is, in this embodiment, the upper box 401 is disposed in a higher position than the lower box 400 before the upper box 401 is placed on the lower box 400. The lower conveyor 203 is disposed so as to pass through the support member 200 along the X2 direction. On the other hand, the upper conveyor 204 is provided from the X1 side of the support member 200 into the interior of the support member 200 (the proximity of the robot 100). The upper box 401 is an example of "workpiece".

As illustrated in Figs. 1 and 2, the robot 100 is a vertical articulated robot. This robot 100 includes a robot main body 1 and a hand 2. The hand 2 is mounted at a tip of the robot main body 1. The hand 2 processes the upper box 401 and the lower box 400. The robot main body 1 includes a base 11 and a robot arm 12. The robot arm 12 is mounted on the base 11. The robot arm 12 has six degrees of freedom. The robot main body 1 is an example of "vertical-articulated-robot main body".

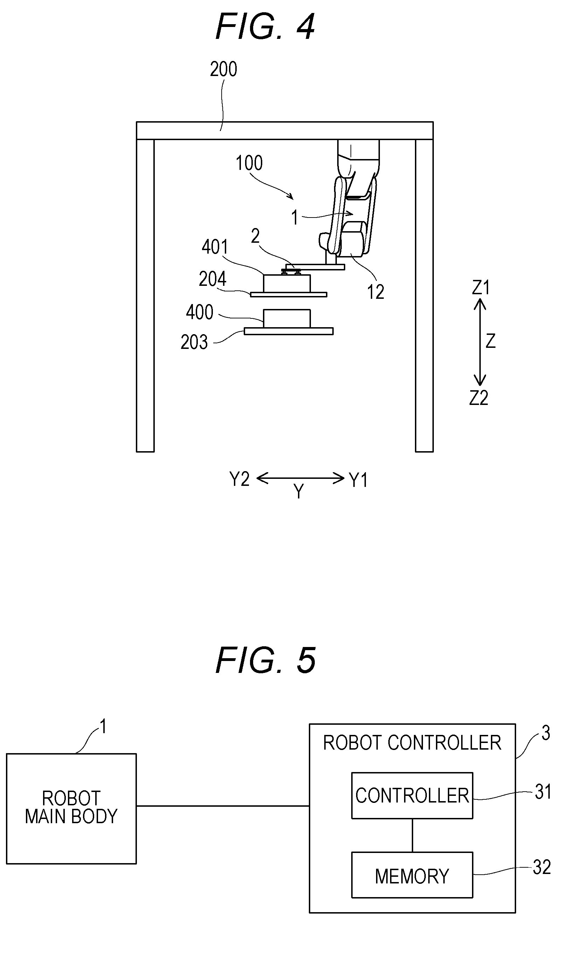

The robot arm 12 has a plurality of arm structures. The rotation axis A1 is an axis vertical to the beam part 201, which is a mounting surface for the robot 100. An arm structure 12a is coupled to the base 11 rotatably around the rotation axis A1. The rotation axis A2 is an axis vertical to the rotation axis A1. An arm structure 12b is coupled to the arm structure 12a rotatably around the rotation axis A2. The rotation axis A3 is an axis parallel to the rotation axis A2. An arm structure 12c is coupled to the arm structure 12b rotatably around the rotation axis A3. The rotation axis A4 is an axis vertical to the rotation axis A3. An arm structure 12d is coupled to the arm structure 12c rotatably around the rotation axis A4. The rotation axis A5 is an axis vertical to the rotation axis A4. An arm structure 12e is coupled to the arm structure 12d rotatably around the rotation axis A5. The rotation axis A6 is an axis vertical to the rotation axis A5. An arm structure 12f is coupled to the arm structure 12e rotatably around the rotation axis A6.
Here, "parallel" and "vertical" are not limited to "parallel" and "vertical" in a strict sense. For example, these have broad meanings including being slightly off from "parallel" and "vertical". The rotation axes A1 to A6 each include a servo motor (joint). Each servo motor has an encoder for detecting its rotational position. Each servo motor is coupled to a robot controller 3 (see Fig. 5). Each servo motor operates based on a command of the robot controller 3.

Fig. 3 is a top view (plan view) of the robot disposed in the ceiling-suspended state at the support member based on one embodiment of this disclosure. In this plan view (seen along the direction from Z1 to Z2 (the Z2 direction), the conveyance paths of the upper box 401 and the lower box 400 (the lower conveyor 203 and the upper conveyor 204) are disposed across the center of the support member 200. The robot main body 1 is disposed displaced from the conveyance paths so as to avoid overlapping these conveyance paths (that is, to avoid projecting over the conveyance paths). In other words, the robot main body 1 is disposed in plan view to be displaced from the conveyance paths (deviated from the conveyance paths) in a direction (the Y1 direction ) approximately perpendicular to the direction for conveying the upper box 401 and the lower box 400 (the X direction). Accordingly, the robot main body 1 is disposed adjacent to these conveyance paths without projecting over the conveyance paths of the upper box 401 and the lower box 400.
Specifically, the base 11 of the robot main body 1 is mounted on the beam part 201 of the support member 200. This beam part 201 is disposed displaced in the Y1 direction from the center of the support member 200 (on the conveyance paths). That is, the beam part 201 is disposed in plan view to be displaced in the Y1 direction from the center of the support member 200, and extends in the X direction parallel to the conveyance paths.
The robot arm 12 of the robot main body 1 is disposed in plan view in a position displaced in the Y1 direction from the conveyance path (the lower conveyor 203 and the upper conveyor 204) of the upper box 401 and the lower box 400. That is, the robot arm 12 is disposed to avoid projecting over the conveyance paths (not to project over the conveyance paths).
In this embodiment, in plan view, the robot main body 1 (the base 11 and the robot arm 12) can move without projecting over the conveyance paths of the upper box 401 and the lower box 400. That is, the robot main body 1 operates without projecting over the conveyance paths both: during processing operation of the hand 2 on the upper box 401 and the lower box 400 (during operation of the hand 2 to place the upper box 401 on the lower box 400); and during waiting of the hand 2 (before the processing operation and after the processing operation of the robot main body 1). On the other hand, during the processing operation of the hand 2 on the upper box 401 and the lower box 400, the hand 2 operates projecting over the conveyance paths of the upper box 401 and the lower box 400 in plan view.

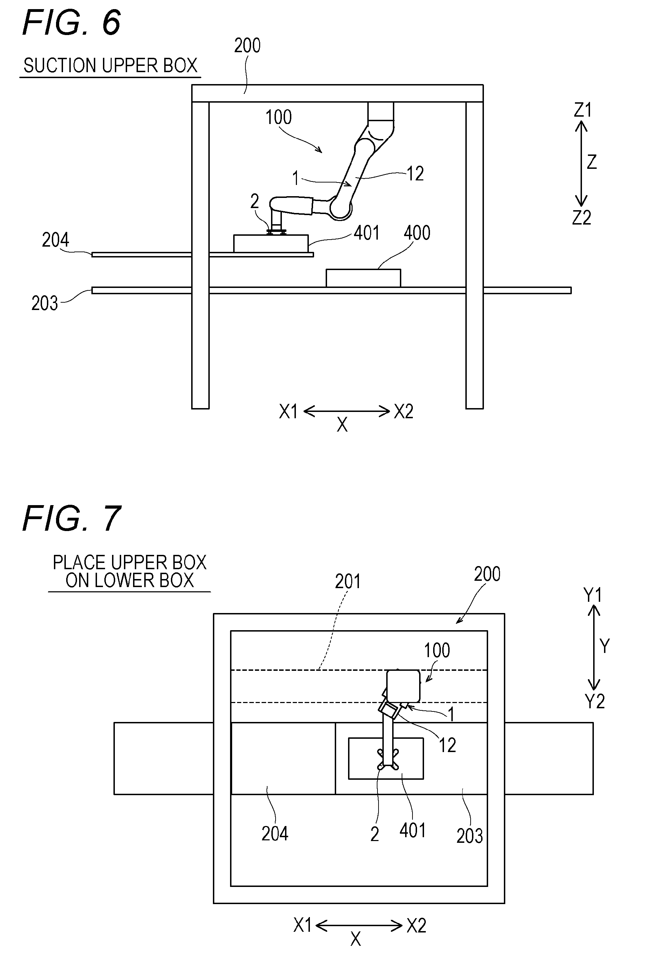

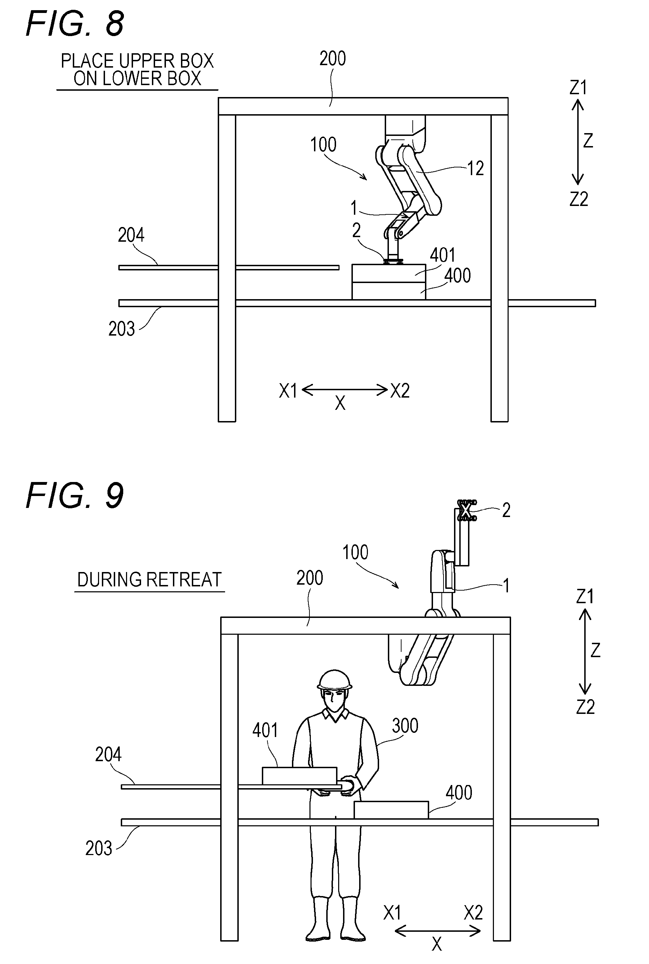

As illustrated in Figs. 4 and 6, the upper box 401 before being placed on the lower box 400 is disposed in a higher position than the lower box 400. That is, the upper conveyor 204, on which the upper box 401 is disposed, is disposed in a higher position than the lower conveyor 203, on which the lower box 400 is disposed. The robot main body 1 is suspended from the ceiling to be displaced from the conveyance paths so as not to project over the conveyance paths of the upper box 401 and the lower box 400. In this state, the hand 2 of the robot main body 1 holds (suctions) the upper box 401 disposed in the higher position (see Fig. 6). Subsequently, the hand 2 performs a processing operation (see Fig. 8) for placing the upper box 401 on the lower box 400.

As illustrated in Fig. 5, a robot controller 3 is coupled to the robot main body 1. The robot controller 3 includes a controller 31 and a memory 32. The robot controller 3 controls the entire operation of the robot main body 1 (the robot 100).

Next, a description will be given of the processing operation and retreat of the robot 100 based on this embodiment by referring to Fig. 3, Fig. 4, and Figs. 6 to 10.

### (During Processing Operation)

First, as illustrating in Fig. 3, Fig. 4, and Fig. 6, the upper conveyor 204 conveys the upper box 401 to a predetermined position (the proximity of the robot 100). Along with this, the lower conveyor 203 conveys the lower box 400 to a predetermined position (the proximity of the robot 100). Subsequently, the robot arm 12 operates to move the hand 2 to the upper side of the upper box 401. Accordingly, the hand 2 suctions (holds) the upper box 401.

Subsequently, as illustrated in Figs. 7 and 8, the robot arm 12 moves in the X2 direction and places the upper box 401 on the lower box 400. Accordingly, the robot main body 1 operates so as not to project over the conveyance paths. That is, the robot main body 1 operates (moves) so as not to project over the conveyance paths of the upper box 401 and the lower box 400 in plan view during the operation of the hand 2 for suctioning the upper box 401 and during the operation of the hand 2 for placing the upper box 401 on the lower box 400.

### (During Retreat)

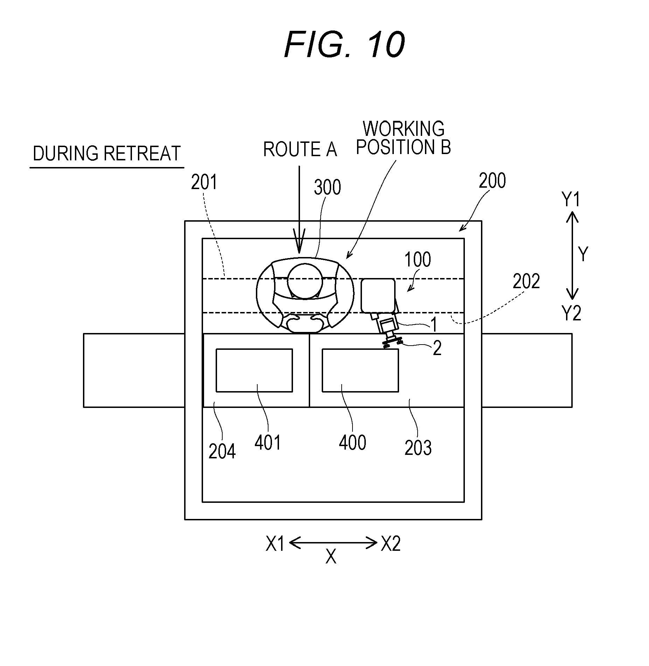

As illustrated in in Figs. 9 and 10, in the case where the robot main body 1 is not processing the upper box 401 and the lower box 400, the robot main body 1 retreats to a position so as not to hinder the operation by a user 300. In this case, the robot main body 1 disposed in the ceiling-suspended state moves upward. Accordingly, when the user 300 processes the upper box 401 and the lower box 400, the robot main body 1 retreats to a position so as not to hinder the operation by the user 300.
The robot main body 1 retreats to a position so as not to overlap a route on which the user 300 moves (a flow line of the user 300) for processing the upper box 401 and the lower box 400. For example, as illustrated in Fig. 10, a route on which the user 300 approaches the upper box 401 and the lower box 400 for performing operation (work) to place the upper box 401 on the lower box 400 by the user 300 is assumed to be a route A. A position for performing operation (work) to place the upper box 401 on the lower box 400 by the user 300 is assumed to be a working position B. The robot main body 1 and the hand 2 retreat to positions displaced from the route A and the working position B. In this case, as illustrated in Fig. 9, the robot main body 1 and the hand 2 retreat to project upward (the direction of the arrow Z1) from the opening part 202 of the support member 200. The robot main body 1 and the hand 2 retreat when, for example, the robot main body 1 and the hand 2 are out of order. Alternatively, the robot main body 1 and the hand 2 retreat when, for example, a workpiece that cannot be processed by a preliminarily instructed (set) operation is conveyed and the processing operation is performed by hand work of the user 300.

In this embodiment, as described above, the robot main body 1 of the robot 100, which employs a vertical articulated robot, is disposed displaced from a position on the conveyance paths. That is, the robot main body 1 is disposed in plan view to be displaced from a position on the conveyance paths so as not to project over the conveyance paths of the upper box 401 and the lower box 400. Accordingly, the robot 100 can be displaced from a route on which the user 300 moves to process the upper box 401 and the lower box 400. As a result, this reduces hindering the operation by the user 300 due to the robot 100 when the user 300 processes the upper box 401 and the lower box 400.

In this embodiment, as described above, the robot main body 1 is disposed in plan view to be displaced from the conveyance paths of the upper box 401 and the lower box 400 in a direction approximately perpendicular to the direction for conveying the upper box 401 and the lower box 400 so as not to project over the conveyance paths. This facilitates disposing the robot main body 1 displaced from the conveyance paths of the upper box 401 and the lower box 400 so as not to project over the conveyance paths (not to overlap the conveyance paths).

In this embodiment, as described above, the robot main body 1 operates so as not to project over the conveyance paths. That is, the robot main body 1 operates so as not to project over the conveyance paths of the upper box 401 and the lower box 400 in plan view both during processing operation of the hand 2 on the upper box 401 and the lower box 400 and during waiting of the hand 2. Accordingly, the robot main body 1 can process the upper box 401 and the lower box 400 in a small operating range.

In this embodiment, as described above, the upper box 401 and the lower box 400 are respectively conveyed by the upper conveyor 204 and the lower conveyor 203. The robot main body 1 is disposed in plan view to be displaced from the upper conveyor 204 and the lower conveyor 203 so as not to project over the upper conveyor 204 and the lower conveyor 203. This allows displacing the robot 100 from the route on which the user 300 moves to process the upper box 401 and the lower box 400, which are conveyed by the upper conveyor 204 and the lower conveyor 203.

In this embodiment, as described above, the upper box 401 and the lower box 400 house a food product for example. The robot main body 1 is suspended from the ceiling to be displaced from the conveyance paths of the upper box 401 and the lower box 400 so as not to project over the conveyance paths. In this state, the hand 2 performs the processing operation for placing the upper box 401 on the lower box 400. This allows displacing the robot 100 from the route on which the user 300 moves to process the upper box 401 and the lower box 400, which house the food product.

In this embodiment, as described above, the upper box 401 before being placed on the lower box 400 is disposed in the higher position than the lower box 400. The robot main body 1 is suspended from the ceiling to be displaced from the conveyance paths so as not to project over the conveyance paths of the upper box 401 and the lower box 400. In this state, the hand 2 performs the processing operation for placing the upper box 401 on the lower box 400 after holding the upper box 401 disposed in the higher position. The upper box 401 is preliminarily disposed in the higher position than the lower box 400. Accordingly, this allows eliminating an operation for lifting the upper box 401 upward compared with the case where the upper box 401 and the lower box 400 are disposed in the same position (at the same height). As a result, this contracts the cycle time for processing work of the robot 100.

In this embodiment, as described above, the robot main body 1 suspended from the ceiling is moved upward in the case where the upper box 401 and the lower box 400 are not being processed. Accordingly, the robot main body 1 retreats to a position so as not to hinder the operation by the user 300 when the user 300 processes the upper box 401 and the lower box 400.
Here, in the parallel link robot, in the case where this robot is disposed immediately above the upper box 401 and the lower box 400, the link part is contracted so as to move the movable part (end effector) of the parallel link robot upward. However, the range of motion of the parallel link robot is comparatively small. Therefore, the parallel link robot hinders the operation by the user 300 when the user 300 processes the upper box 401 and the lower box 400.
On the other hand, in this embodiment, the robot 100 includes the vertical articulated robot main body 1 that has a comparatively wide range of motion. This facilitates retreat of the robot main body 1 to a position so as not to hinder the operation by the user 300 when the user 300 processes the upper box 401 and the lower box 400.

In this embodiment, as described above, the robot main body 1 can retreat to a position so as not to overlap the movement path of the user 300. That is, the robot main body 1 can retreat to a position so as not to overlap the route on which the user 300 moves for processing the upper box 401 and the lower box 400 by the user 300. This reduces hindering the user 300 due to the robot main body 1 during the processing operation by the user 300 on the upper box 401 and the lower box 400. Additionally, this reduces hindering the user 300 due to the robot main body 1 when the user 300 moves to a position for processing the upper box 401 and the lower box 400. Furthermore, this reduces hindering the user 300 due to the robot main body 1 when the user 300 retreats from the position for processing the upper box 401 and the lower box 400.

The presently disclosed embodiments disclosed are in all senses an illustrative example of this disclosure. This disclosure is not limited by these embodiments. The scope of this disclosure is not limited by the above-described embodiment, but rather is indicated by claims. Furthermore, the scope of this disclosure includes meanings equivalent to claims and all modifications within claims.

For example, in the above-described embodiment, the example where the robot is disposed in the ceiling-suspended state at the beam part (ceiling portion) of the support member has been described. However, this should not be construed in a limiting sense. For example, the robot may be disposed in a ceiling-suspended state on a wall vertical to the floor surface. Alternatively, the robot may be disposed at a ceiling of a building where the robot is disposed.

In the above-described embodiment, the example where the robot arm has six degrees of freedom has been described. However, this should not be construed in a limiting sense. For example, the degree of freedom of the robot arm may be different degree of freedom (for example, five degrees of freedom or seven degrees of freedom).

In the above-described embodiment, the example where the robot main body is disposed in plan view in the Y1 direction (the Y1 direction of the upper conveyor and the lower conveyor, see Fig. 3) approximately perpendicular to the direction for conveying the upper box and the lower box has been described. However, this should not be construed in a limiting sense. For example, the robot main body may be disposed in the Y2 direction of the upper conveyor and the lower conveyor.

In the above-described embodiment, the example where the robot main body operates so as not to project over the conveyance paths of the upper box and the lower box in plan view during the processing operation of the hand on the upper box and the lower box has been described. However, this should not be construed in a limiting sense. For example, the robot main body may temporarily project over the conveyance paths of the upper box and the lower box (may temporarily overlap the conveyance paths of these) during the processing operation of the hand on the upper box and the lower box.

In the above-described embodiment, the example where the robot main body is disposed displaced from the upper conveyor and the lower conveyor in plan view so as not to project over the upper conveyor and the lower conveyor has been described. However, this should not be construed in a limiting sense. For example, the robot main body may be disposed any place insofar as the robot main body does not project over the upper box and the lower box (may be disposed any place insofar as the robot main body does not overlap the upper box and the lower box). For example, a part of the robot main body may project over a part of the upper conveyor and the lower conveyor (such as ends of the conveyors where the upper box and the lower box are not arranged).

In the above-described embodiment, the example where the food product is housed by the upper box and the lower box has been described. However, this should not be construed in a limiting sense. For example, goods such as a medical product and a cosmetic product other than the food product may be housed in the upper box and the lower box.

In the above-described embodiment, the example where the hand performs the processing operation for placing the upper box on the lower box has been described. However, this should not be construed in a limiting sense. For example, the hand may be configured to perform the processing operation on a workpiece other than the upper box and the lower box.

In the above-described embodiment, the example where the upper box before being placed on the lower box is disposed in the higher position than the lower box has been described. However, this should not be construed in a limiting sense. For example, the upper box and the lower box may be disposed approximately at the same height. Alternatively, the upper box may be disposed in a lower position than the lower box.

In the above-described embodiment, the example where one upper conveyor and one lower conveyor are disposed at the support member (the proximity of the robot) has been described. However, this should not be construed in a limiting sense. For example, a plurality of upper conveyors and a plurality of lower conveyors may be disposed at the support member (the proximity of the robot). For example, two upper conveyors and two lower conveyors may be disposed in two rows at the Y2 direction side of the robot (see Fig. 3). In this case, the robot may be configured to perform the processing operation on the upper boxes and the lower boxes conveyed from the respective conveyors.

In the above-described embodiment, the example where the robot main body and the hand retreat to project upward from the opening part of the support member in the case where the robot main body is not processing the upper box and the lower box has been described. However, this should not be construed in a limiting sense. For example, the robot main body and the hand may retreat to be horizontal to the ceiling of the support member in the case where the robot main body is not processing the upper box and the lower box. That is, the robot main body and the hand may be configured to retreat to a position so as not to hinder the operation by the user for processing the workpiece by moving in a predetermined direction.
The robot according to this disclosure may be the following first to second robots.
A first robot includes: a hand configured to process a workpiece; and a vertical-articulated-robot main body where the hand is mounted. The vertical-articulated-robot main body is disposed in a ceiling-suspended state. The vertical-articulated-robot main body is disposed displaced from a conveyance path without projecting over the conveyance path of the workpiece in plan view.
According to the first robot, as described above, the vertical-articulated-robot main body is displaced from the conveyance path without projecting over the conveyance path of the workpiece in plan view. This allows displacing the robot from the route on which the user moves for processing the workpiece by the user. As a result, this can reduce hindering the operation by the user for processing the workpiece due to the robot.
The second robot includes: a hand configured to process a workpiece; and a vertical-articulated-robot main body where the hand is mounted. The vertical-articulated-robot main body is disposed in a ceiling-suspended state. The vertical-articulated-robot main body is configured to retreat to a position so as not to hinder an operation of a user for processing the workpiece by moving the vertical-articulated-robot main body, which is disposed in the ceiling-suspended state, upward in the case where the workpiece is not being processed.
In this second robot, in the case where the workpiece is not being processed, the vertical-articulated-robot main body retreats to the position so as not to hinder the operation by the user for processing the workpiece by moving the vertical-articulated-robot main body, which is disposed in the ceiling-suspended state, upward. In the case where a parallel link robot is disposed immediately above the workpiece, the range of motion of the parallel link robot is comparatively small even if the link part of the parallel link robot is contracted so as to move the movable part (end effector) of the parallel link robot upward. Accordingly, the parallel link robot hinders the operation by the user for processing the workpiece. On the other hand, in the case where the robot is constituted of the vertical-articulated-robot main body with a comparatively wide range of motion, the vertical-articulated-robot main body has a comparatively wide range of motion. This facilitates retreat of the vertical-articulated-robot main body to a position so as not to hinder the operation by the user for processing the workpiece.
The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A robot (100), comprising:
a hand (2) configured to process a workpiece (400, 401); and
an articulated-robot main body (1) where the hand (2) is mounted, wherein
the articulated-robot main body (1) is displaced from a conveyance path of the workpiece (400, 401) in plan view.

2. The robot (100) according to claim 1, wherein
the articulated-robot main body (1) is disposed to avoid projecting over the conveyance path of the workpiece (400, 401) in plan view.

3. The robot (100) according to claim 1 or 2, wherein
the articulated-robot main body (1) is displaced from the conveyance path in a direction approximately perpendicular to a direction for conveying the workpiece (400, 401) in plan view.

4. The robot (100) according to any one of claims 1 to 3, wherein
the articulated-robot main body (1) operates to avoid projecting over the conveyance path of the workpiece (400, 401) in plan view both during a processing operation of the hand (2) on the workpiece (400, 401) and during waiting of the hand (2).

5. The robot (100) according to any one of claims 1 to 4, wherein
the conveyance path is a conveyor (203, 204) and the workpiece (400, 401) is conveyed on the conveyor (203, 204).

6. The robot (100) according to any one of claims 1 to 5, wherein
the workpiece (400, 401) includes at least one of a food product, a medical product, and a cosmetic product.

7. The robot (100) according to claim 6, wherein
the workpiece (400, 401) includes:
a lower box (400) that houses at least one of the food product, the medical product, and the cosmetic product; and
an upper box (401) to be placed on the lower box (400), and
the hand (2) is configured to perform a processing operation for placing the upper box (401) on the lower box (400).

8. The robot (100) according to claim 7, wherein
the upper box (401) is disposed in a higher position than the lower box (400) before being placed on the lower box (400), and
the hand (2) performs the processing operation for placing the upper box (401) on the lower box (400) after holding the upper box (401) disposed at the higher position.

9. The robot (100) according to any one of claims 1 to 8, wherein
the articulated-robot main body (1) is configured to retreat to a position so as not to hinder an operation of a user (300) for processing the workpiece (400, 401) by moving in a predetermined direction.

10. The robot (100) according to claim 9, wherein
the articulated-robot main body (1) is configured to retreat to a position to avoid overlapping a route on which the user (300) moves for processing the workpiece (400, 401) by the user (300).

11. The robot (100) according to any one of claims 1 to 10, wherein
the articulated-robot main body (1) is a vertical-articulated-robot main body (1).

12. The robot (100) according to any one of claims 1 to 11, wherein
the articulated-robot main body (1) is disposed in a ceiling-suspended state.

13. The robot (100), comprising:
a hand (2) configured to process a workpiece (400, 401); and
an articulated-robot main body (1) where the hand (2) is mounted, wherein
the articulated-robot main body (1) is configured to retreat to a position so as not to hinder an operation of a user (300) for processing the workpiece (400, 401) by moving in a predetermined direction.

14. The robot (100) according to claim 13, wherein
the articulated-robot main body (1) is configured to retreat to a position so as not to overlap a route on which the user (300) moves for processing the workpiece (400, 401) by the user (300).

15. The robot (100) according to claim 13 or 14, wherein
the predetermined direction is an upward direction with respect to the workpiece (400, 401).
